# EUROPÄISCHE PATENTANMELDUNG

(11) **EP 0 819 516 A2**
(43) Veröffentlichungstag der Anmeldung: **21.01.1998**
(21) Anmeldenummer: 97111392.3
(22) Anmeldetag: 05.07.1997
(51) Int. Cl.: B29C 70/78, B29C 37/00

(54) **Verfahren zum Lackieren eines Gegenstandes während eines Urformverfahrens sowie Lackfolie zu Durchführung des Verfahrens**

(30) Priorität: 18.07.1996 DE 19628966
(71) Anmelder: Daimler-Benz Aktiengesellschaft, 70546 Stuttgart (DE)
(72) Erfinder: Negele, Oswin, Dr., 71404 Korb (DE); Holdik, Karl, Dr., 89081 Ulm (DE)

(57) **Zusammenfassung**

Die Erfindung betrifft ein Verfahren zum Lackieren eines Gegenstandes während eines Urformverfahrens, bspw. einem Spritzgieß-, Druckgieß- oder Hinterschäum-Verfahrens mit einer Lackfolie, sowie eine Lackfolie zur Durchführung des Verfahrens. Bei dem Verfahren wird eine Lackfolie in eine geöffnetes Formwerkzeug, welches innenseitig die Urform des Bauteils aufweist, eingelegt. Die Urform wird geschlossen und mit einem Vormaterial befüllt, wobei das Vormaterial innerhalb der Urform zur zumindest Ausbildung des Gegenstandes ausgehärtet und/oder abgebunden und/oder ausreagiert wird. Zur Vereinfachung des Verfahrens wird der Lack der Lackschicht der Lackfolie vor dem Einbringen des Vormaterials klebefrei teilgehärtet bzw. teilvernetzt und erst während und/oder nach dem Einbringen des Vormaterials in die Urform ausgehärtet.

## Beschreibung

Die Erfindung betrifft eine Verfahren zum Lackieren eines Gegenstandes während eines Urformverfahrens sowie eine Lackfolie zur Durchführung des Verfahrens, wie beides aus der gattungsbildend zugrundegelegten DE 42 28 194 A1 als bekannt hervorgeht.

Aus der DE 42 28 194 A1 ist eine Verfahren zum Applizieren einer Lackfolie bei einem Hinterspritzen der Lackfolie in einem Formwerkzeug bekannt. Bei diesem Verfahren wird auf eine Oberfläche einer Trägerfolie ein Lack aufgetragen. Die mit dem Lack benetzte Trägerfolie ist entweder bereits vor der Auftragung des Lackes in dem Formwerkzeug zum Hinterspritzen angeordnet oder wird mit noch nassem Lack in das Formwerkzeug eingelegt. Danach wird das Formwerkzeug geschlossen und die Lackfolie bei noch nassem Lack zur Ausbildung des Gegenstandes formend hinterspritzt. Anschließend wird der so hergestellte Gegenstand aus dem Formwerkzeug entnommen und die Trägerfolie entfernt. Da hierbei die Lackfolie vor dem Formen des Gegenstandes mit einem nassen Lack in dem Formwerkzeug angeordnet sein muß, ist dieses Verfahren schwierig zu betreiben. Ferner muß der Gegenstand entweder bis zur Abtrocknung des Lackes im Formwerkzeug verbleiben oder außerhalb der Urform bis zur Aushärtung gelagert werden. Dadurch ist entweder die mögliche Taktrate des Formwerkzeuges verringert oder es wird ein großer Lagerbedarf benötigt. Desweiteren muß nach der Aushärtung des Lackes auch noch die Trägerfolie entfernt und entsorgt werden.

Aus der EP 361 351 A1 ist eine Lackfolie bekannt, die zum Lackieren von dreidimensional gewölbten Flächen formstabiler vorgefertigter Gegenstände vorgesehen ist. Die Lackfolie weist eine Trägerfolie, eine Klebeschicht und eine Lackschicht auf. Vor der Applikation der Lackfolie wird der strahlungshärtbare Lack der Lackschicht der Lackfolie derart teilgehärtet, daß er staubtrocken ist. Anschließend wird die Lackfolie erwärmt und auf den ggf. ebenfalls erwärmten Gegenstand aufgezogen. Nach erfolgter Applikation der Lackfolie wird der Lack der Lackschicht thermisch endgehärtet, wobei gleichzeitig die Abbindereaktion zwischen der Kleberschicht und der Lackschicht und dem Gegenstand vorgenommen werden kann.

Eine derartige Lackfolie kann nur bedingt, d.h. nur bei genügender Restelastizität für einen Urformverfahren verwendet werden. Desweiteren kann es in diesem Verwendungsfall bei der zur Härtung des Lackes notwendigen Erwärmung zu einer Wärmedehnung des durch ein Hinterschäumen bzw. durch ein Hinterspritzen hergestellten Gegenstandes kommen, wodurch u.a. die Qualität der Lackierung beeinträchtigt kann.

Wie schon erwähnt, weisen derartige Lackfolien eine Trägerfolie auf, die - bei mittlerer Anordnung der Trägerfolie - am Produkt verbleiben oder - bei Außenanordnung der Trägerfolie - nach der Applikation der Lackfolie entfernt und ggf. recycelt werden. In beiden Fällen ist der Materialaufwand hoch, wodurch die Masse der zur Lackierung zu verwendenden Lackfolie und auch die Herstellungskosten hoch sind.

Die Aufgabe der Erfindung ist es, das zugrundegelegte Verfahren und die zugrundegelegte Lackfolie dahingehend weiterzuentwickeln, daß sie einfacher und universeller verwendbar sind.

Die Aufgabe wird erfindungsgemäß bei dem zugrundegelegten (Applikations-) Verfahren mit den kennzeichnenden Verfahrensschritten des Anspruchs 1 und bzgl. der zugrundegelegten Lackfolie mit den kennzeichnenden Merkmalen des Anspruchs 13 gelöst. Durch Verwendung einer Lackfolie mit teilgehärtetem Lack, dessen Endhärtung mittels elektromagnetischer Strahlung im beanspruchten Wellenlängenbereich, ermöglicht ist, wird der Gegenstand bei der Aus- bzw. Endhärtung des Lackes der Lackschicht der Lackfolie allenfalls geringfügig belastet. Anzumerken ist hierbei, daß bei einer Endhärtung der Lackschicht mittels Elektronenstrahlung, die Elektronenstrahlen im Wellenbild, also hinsichtlich ihrer Wellenlänge zu betrachten sind.

Insbesondere ist auch eine Herstellung einer nur eine Lackschicht und eine Kleberschicht aufweisenden Lackfolie günstig, da hierbei auf die bislang vorhandene Trägerfolie verzichtet werden kann, die somit - wie bislang im Falle einer außenseitig angeordneten Trägerfolie - nicht mehr von dem mit der Lackfolie versehenen Substrat, insbesondere eine Fahrzeugkarosserie eines Automobils, separat entfernt werden muß, bzw. - im Falle einer bislang mittig angeordneten Trägerfolie - an demselben verbleibt.

Weitere sinnvolle Ausgestaltungen sind den entsprechenden Unteransprüchen entnehmbar. Im übrigen wird die Erfindung anhand von in den Figuren dargestellten Ausführungsbeispielen nähers erläutert. Dabei Zeigt
- Fig. 1: einen Ausschnittsvergrößerung einer auf einem Gegenstand applizierten Lackfolie und
- Fig. 2 a bis f: eine Lackfolie zum Tiefziehen und mehrere Verfahrenschritte eines dazugehörigen Verfahrens zum Hinterschäumen bzw. Hinterspritzen dieser Lackfolie.

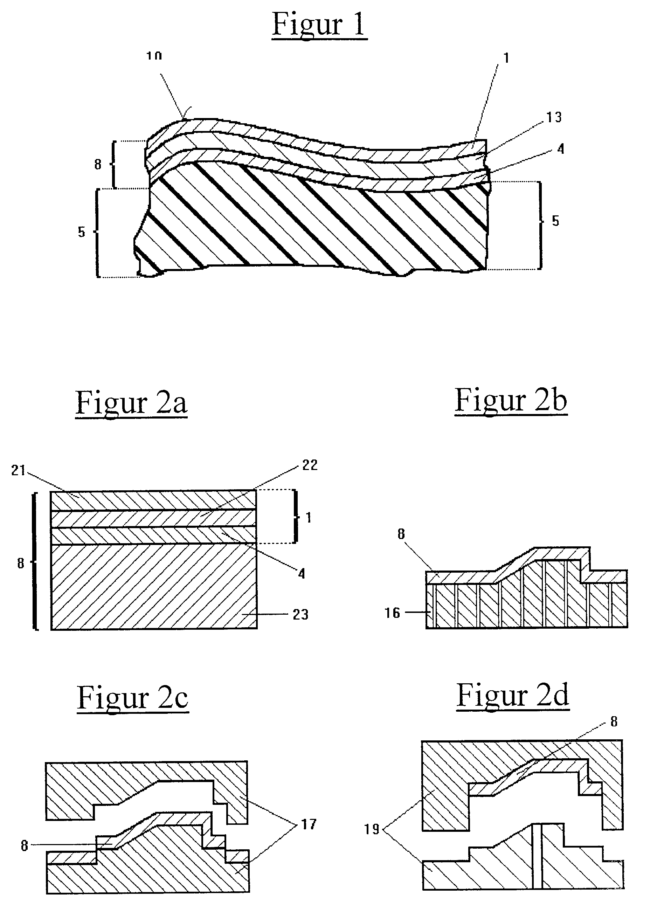

In Figur 1 ist ein dreidimensional gewölbter und durch ein Hinterspritzen hergestellter Gegenstand 5 dargestellt, auf dem eine Lackfolie 8 appliziert ist. Die Lackfolie 8 ist aus einer Lackschicht 1 und einer Kleberschicht 4 gebildet. Für die Kleberschicht 4 wird sinnvollerweise ein reaktivierbarer Kleber verwendet, da dadurch die gesamte Lackfolie 8 bspw. als Rolle auf einfache Weise zwischengelagert werden kann.

Gegebenenfalls kann die Lackfolie 8 noch eine stabilisierend wirkende Trägerfolie 13 aufweisen, die im vorliegenden Fall mittig, also zwischen der Kleber- 4 und der Lackschicht 1, angeordnet ist. Je nach Anwendungsfall kann die Trägerfolie 13 aber auch außenseitig, also zur Sichtseite 10 hin, angeordnet sein.

Die Lackschicht 1 ist aus einem Lack gebildet, der teilhärtbar bzw. teilvernetztbar ist und der nach der Teilhärtung mittels einer elektromagnetischen Strahlung, deren Wellenlänge unterhalb des sichtbaren Spektrums angeordnet ist, endgehärtet werden kann. Durch diese Materialwahl des Lackes kann der Lack der Lackschicht 1 vor der Applikation der Lackfolie 8 und vor deren Zwischenlagerung als Rolle 9 klebefrei und staubtrocken teilgehärtet werden. Für die Teilhärtung wird elektromagnetische Strahlung 2, insbesondere Infrarot-, Hitze-, Ultraviolett und/oder Elektronenstrahlung oder dgl. verwendet.

Ferner ist es günstig, für die Lackschicht 1 einen Lack mit einer Glasübergangstemperatur unterhalb 40 °C, insbesondere unterhalb 30 °C zu wählen. Bei der Applikation der Lackfolie 8 auf dem Gegenstand 5 - also bei dem Hinterspritzen bzw. Hinterschäumen - kann dann die teilgehärtete Lackschicht 1 auf ihre Glasübergangstemperatur oder geringfügig oberhalb ihrer Glasübergangstemperatur erhitzt werden, wodurch die Lackfolie 8 blasen- und falten- sowie orangenhautfrei appliziert bzw. hinterspritzt werden kann. Der Energieeintrag zum Erwärmen des Lackes kann günstigerweise durch eine Erwärmung des hinterbringenden Materials bspw. durch eine Vorerwärmung und/odfer exotherme Reaktion erfolgen.

Die Wahl der Materialien der Lackfolie 8 hinsichtlich der Erwärmungstemperatur sichert, daß keine bleibende thermische Beeinträchtigung oder eine Zerstörung des Gegenstands 5 erfolgt.

Die bei dem Urform-Verfahren, hier ein Spritzgießverfahren, zweckmäßigerweise in einem elastisch Zustand in ein Formwerkzeug einzulegende Lackfolie 8 wird bei der Endhärtung des Lackes der Lackschicht 1 einer insbesondere elektromagnetischen Strahlung ausgesetzt, deren Wellenlänge unterhalb derjenigen des sichtbaren Spektrums angeordnet ist. Innerhalb dieser Definition sind auch Elektronenstrahlen zu verstehen, die - aufgrund des vorliegenden Wellen-Teilchendualismus im Wellenraum - hinsichtlich ihrer Wellenlänge zu betrachten sind.

Durch diese elektromagnetische Strahlung wird die Lackschicht 1 endausgehärtet bzw. endvernetzt. Durch diese Art der Endhärtung der Lackschicht 1 bei zweckmäßigerweise gleichzeitiger Strahlungshärtung der insbesondere aktivierbaren Kleberschicht 4 werden die Materialien des Gegenstands 5 allenfalls geringfügig beansprucht.

Durch die erfindungsgemäße Materialwahl des Lackes der Lackschicht 1 kann die Lackfolie 8 thermoplastisch appliziert und nach erfolgter Applikation duroplastisch vernetzt werden.

Von besonderem Vorteil ist es, wenn als Binder für die Lackschicht 1 oder im Falle eines mehrlagigen Aufbaus der Lackschicht 1 wenigstens für deren außenseitige Lage Phosphazen und/oder Phosphazenharz und/oder deren Derivate und/oder deren Vorprodukte verwendet werden. Derartige Lackfolien 8 weisen neben einer guten Verarbeitbarkeit bei der Herstellung und der Applikation auch eine ausgezeichnete Kratzfestigkeit auf.

Ferner können diese Lackfolien 8 mit einer guten Umweltverträglichkeit hergestellt werden, so daß notwendige Maßnahmen zu Schutz der Umwelt weitgehend vermindert sind. Desweiteren sind diese Lackfolien 8 auch preisgünstig herzustellen.

Als weiterer Vorteil dieser Lackfolien 8 ist anzumerken, daß sie nach der Teilhärtung thermoplastisch sind, während sie nach der Endhärtung - nach erfolgter Applikation der Lackfolie 8 - duroplastisch vernetzbar sind. Daher sind die fertig applizierten Lackfolien 8 schleif- und polierbar. Bei geringfügigen Beschädigungen bietet die Polier- und Schleifbarkeit den Vorteil, daß die derartigen Lackfolien beschichtete Gegenstände in der Art von Ausbesserungen einfach repariert werden können.

Dieser Umstand ist vorzugsweise bei der Verwendung von derartigen Lackfolien 8 als hochwertige Dekorfolien günstig, da diese bislang zumeist aus Fluorthermolasten (z.B. PVDF) kostenintensiv und auf ökologisch bedenkliche Weise hergestellt werden. Des weiteren sind Lackfolien auf PVC und PVDF nicht polier- und schleifbar, weshalb sie auch nicht in geringen Flächen repariert werden können.

Ferner kann es bei geringerer Kratzfestigkeit der Lackfolie 8 sinnvoll sein, als Binder für die Lackschicht 1 oder im Falle eines mehrlagigen Aufbaus der Lackschicht 1 wenigstens für deren außenseitige Lage Urethan und/oder dessen Derivate und/oder dessen Vorprodukte zu wählen.

Eine weitere Möglichkeit für den Binder ist es Acrylate und/oder deren Derivate und/oder deren Vorprodukte zu wählen.

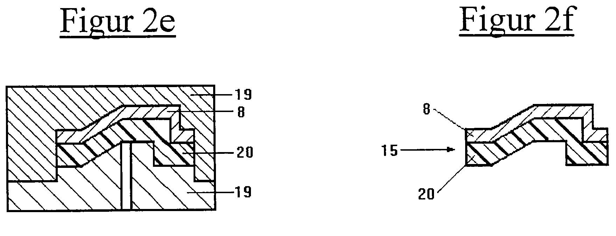

In Figur 2a ist eine Lackfolie 8 dargestellt, die besonders zum Hinterschäumen bzw. Hinterspritzen mit Kunststoff geeignet ist. Die für ein derartiges Verfahren bevorzugte Lackfolie 8 gemäß Figur 4a weist folgenden Schicht- oder Lagenaufbau auf: die sichtseitig äußere Lage 21 ist aus Klarlack, die darauffolgende Schicht 22 ist eine farb- und/oder effektgebende Schicht, die nachfolgende Schicht ist eine Kleberschicht 4 und die letzte Schicht, also die der Hinterspritzung zugewandte Schicht ist eine Materiallage 23, die beim Hinterspritzen mit dem zu hinterspritzenden Material ohne Zugabe von weiteren Substanzen insbesondere monolitisch verbindbar ist. Bevorzugt ist diese Materiallage 23 aus dem gleichen Material wie das zu hinterspritzende Material hergestellt.

In den weiteren Figuren 2b bis 2f sind mehrere Verfahrensschritte eines dazugehörigen Urform-Verfahrens insbesondere eines Hinterschäum-Verfahrens zur Herstellung eines mit einer Lackfolie 8 dekorierten und hinterschäumten Gegenstands 15 (siehe Figur 2f) dargestellt.

In Figur 2b wird die Lackfolie thermisch vorzugsweise auf eine Temperatur im Bereich der Glasübergangstemperatur der Lackschicht 1 der Lackfolie 8 erhitzt und über eine Patrize 18 mittels Vakuum insbesondere faltenfrei und bleibend tiefgezogen. Die tiefgezogen Lackfolie 8 wird - wie in Figur 4c dargestellt entsprechend einer gewünschten umlaufen Kontur in einem Stanzwerkzeug 17 ausgestanzt.

Die gestanzte und teifgezogene Lackfolie 8 wird in einen Spritzgießform 19 eingelegt und mit einem Kunststoff 20 hinterspritzt. Das Hinterspritzen erfolgt zweckmäßigerweise im Bereich der Glasübergangstemperatur der Lackschicht 1. Zum formgetreuen Ausbilden des hinterspritzt herzustellenden und fertig dekorierten Gegenstandes kann die elastische Lackfolie 8 beim Hinterspritzen gleichzeitig gegen die negativ zu der gewünschten Form des Gegenstandes 15 gearbeiteten Begrenzungen der Formwerkzeug 19 gepreßt werden. Nach der Aushärtung des hinterspritzten Kunststoffes 20 wird der fertig dekorierte Gegenstand 15 aus dem Formwerkzeug 19 entnommen und die Lackschicht 8 mittels Strahlenhärtung duroplastisch gehärtet.

Bei einem wie in Figur 4a dargestellten mehrlagigen Aufbau der Lackschicht 1 kann nur die äußere Lage 21, die in diesem Fall aus Klarlack gebildet ist, gehärtet werden, wobei eine farbgebende und/oder effektgebende Schicht 22 der Lackschicht 1 thermoplastisch verbleibt. Unter einer effektgebenden Schicht sind insbesondere derartige Schichten zu verstehen, die Pigmente mit orientiert dreidimensional vernetzte flüssigkristalline Substanzen mit chiraler Phase aufweisen, welche Pigmente - eine vom Betrachtungswinkel abhängige Farbigkeit bewirken. Derartige Pigmente sind insbesondere aus der EP 601 483 B1 bekannt. Dies ist u.a. daher sinnvoll, da eine Strahlenhärtung der farb- und/oder effektgebenden Schicht 22 apparativ aufwendig ist.

Soll die farbgebende und/oder effektgebende Schicht dennoch gleichfalls duroplastisch gehärtet werden, erfolgt die Endhärtung der farb- und/oder effektgebenden Schicht 22 zweckmäßigerweise mittels Elektronenstrahlen.

Bei einem derartigen Verfahren ist insbesondere die in Figur 4 a dargestellte Lackfolie 8 nützlich. Der Schicht- oder Lagenaufbau der Lackfolie ist wie folgt: Klarlack, Farb- und/oder Effektschicht, ggf. Kleberschicht und zuletzt, also der Hinterspritzung zugewandt, eine Materiallage, die beim Hinterspritzen mit dem zu hinterspritzenden Material ohne Zugabe von weiteren Substanzen insbesondere monolitisch verbindbar ist. Bevorzugt ist diese Materiallage aus dem gleichen Material wie das zu hinterspritzende Material hergestellt.

## Patentansprüche

1. Verfahren zum Lackieren eines Gegenstandes während eines Urformverfahrens, bspw. einem Spritzgieß-, Druckgieß- oder Hinterschäum-Verfahrens, bei dem eine Lackfolie in ein geöffnetes Formwerkzeug, welches innenseitig die Urform des Gegenstands aufweist, eingelegt, die Urform geschlossen und mit einem Vormaterial befüllt wird und bei dem das Vormaterial innerhalb der Urform zur Ausbildung des Gegenstandes ausgehärtet und/oder abgebunden und/oder ausreagiert wird,
**dadurch gekennzeichnet,**
daß der Lack der Lackschicht (1) der Lackfolie (8) vor dem Einbringen des Vormaterials klebefrei teilgehärtet bzw. teilvernetzt und erst während und/oder nach dem Einbringen des Vormaterials in die Urform ausgehärtet wird.

2. Verfahren nach Anspruch 1,
**dadurch gekennzeichnet,**
daß der Lack der Lackschicht (1) vor dem Einlegen in die Urform teilgehärtet wird.

3. Verfahren nach Anspruch 1,
**dadurch gekennzeichnet,**
daß der Lack der Lackschicht in dem Formwerkzeug (19) ausgehärtet wird.

4. Verfahren nach Anspruch 1,
**dadurch gekennzeichnet,**
daß der Lack der Lackschicht (1) durch elektromagnetische Strahlung teil- und/oder ausgehärtet wird.

5. Verfahren nach Anspruch 1,
**dadurch gekennzeichnet,**
daß der Lack der Lackschicht (1) durch eine elektromagnetische Strahlung, deren Wellenlänge unterhalb des sichtbaren Spektrums angeordnet ist, ausgehärtet wird.

6. Verfahren nach Anspruch 1,
**dadurch gekennzeichnet,**
daß ein Lack mit einer Glasübergangstemperatur unterhalb 40 °C, insbesondere unterhalb 30 °C ausgewählt wird.

7. Verfahren nach Anspruch 1,
**dadurch gekennzeichnet,**
daß bei einem mehrschichtigen Aufbau der Lackschicht zumindest die sichtseitig außenliegende Lage (21), insbesondere aus Klarlack mittels der elektromagnetischen Strahlung endhärtbar ist.

8. Verfahren nach Anspruch 1,
**dadurch gekennzeichnet,**
daß eine Lackfolie mit einer Lackschicht (1) gewählt wird, die wenigstens eine farb- und/oder effektgebenden Schicht (22) und eine sichtseitig zumindest mittelbar darauf angeordneten sichtseitig außenliegenden Lage (21) aufweist, daß die außenliegende Lage (21) mittels der elektromagnetischen Strahlung ausgehärtet wird und daß die farb- und/oder effektgebende Schicht (22) bei der Endhärtung der außenliegenden Lage (21) in thermoplastischem Zustand beibehalten wird.

9. Verfahren nach Anspruch 1,
**dadurch gekennzeichnet,**
daß bei einem mehrschichtigen Aufbau der Lackschicht (1) die sichtseitig außenliegende Lage (21), insbesondere aus Klarlack, duroplastisch ausgehärtet wird.

10. Verfahren nach Anspruch 1,
**dadurch gekennzeichnet,**
daß bei einem mehrschichtigen Aufbau der Lackschicht (1) die sichtseitig außenliegende Lage (21), insbesondere aus Klarlack, duroplastisch ausgehärtet wird und als Binder für die außenliegende Lage (21) Phosphazen und/oder Phosphazenharz und/oder deren Derivate und/oder deren Vorprodukte gewählt wird.

11. Verfahren nach Anspruch 1,
**dadurch gekennzeichnet,**
daß bei einem mehrschichtigen Aufbau der Lackschicht (1) die sichtseitig außenliegende Lage (21), insbesondere aus Klarlack, duroplastisch endhärtbar ist und daß der Binder für die außenliegende Lage (21) Acrylate und/oder deren Derivate und/oder deren Vorprodukte ist.

12. Verfahren nach Anspruch 1,
**dadurch gekennzeichnet,**
daß eine Lackfolie mit einer unmittelbar auf der Lackschicht (1) angeordneten Kleberschicht (4) gewählt wird.

13. Lackfolie zum Lackieren eines Gegenstandes während eines Urformverfahrens, bspw. einem Spritzgieß-, Druckgieß- oder Hinterschäum-Verfahrens, mit einer Lackschicht und einer Klebeschicht,
**dadurch gekennzeichnet,**
daß der Lack der Lackschicht (1) vor dem Einbringen in ein Formwerkzeug (19) klebefrei teilgehärtet ist und daß der Lack der Lackschicht (1) durch eine elektromagnetische Strahlung endhärtbar ist.

14. Lackfolie nach Anspruch 13,
**dadurch gekennzeichnet,**
daß der Lack der Lackschicht (1) durch eine elektromagnetische Strahlung, deren Wellenlänge unterhalb des sichtbaren Spektrums angeordnet ist, endhärtbar ist.

15. Lackfolie nach Anspruch 13,
**dadurch gekennzeichnet,**
daß der Lack eine Glasübergangstemperatur unterhalb 40 °C, insbesondere unterhalb 30 °C aufweist.

16. Lackfolie nach Anspruch 13,
**dadurch gekennzeichnet,**
daß bei einem mehrschichtigen Aufbau der Lackschicht (1) zumindest die sichtseitig außenliegende Lage (21), insbesondere aus Klarlack mittels der elektromagnetischen Strahlung endhärtbar ist.

17. Lackfolie nach Anspruch 13,
**dadurch gekennzeichnet,**
daß die Lackschicht (1) wenigstens eine farb- und/oder effektgebenden Schicht (22) und eine sichtseitig zumindest mittelbar darauf angeordneten sichtseitig außenliegenden Lage (21) aufweist, daß die außenliegende Lage (21) mittels der elektromagnetischen Strahlung endhärtbar ist und daß die farb- und/oder effektgebende Schicht (22) nach der Endhärtung der außenliegenden Lage (21) thermoplastisch ist.

18. Lackfolie nach Anspruch 13,
**dadurch gekennzeichnet,**
daß bei einem mehrschichtigen Aufbau der Lackschicht (1) die sichtseitig außenliegende Lage (21), insbesondere aus Klarlack, duroplastisch endhärtbar ist.

19. Lackfolie nach Anspruch 13,
**dadurch gekennzeichnet,**
daß bei einem mehrschichtigen Aufbau der Lackschicht (1) die sichtseitig außenliegende Lage (21), insbesondere aus Klarlack, duroplastisch endhärtbar ist und daß der Binder für die außenliegende Lage (21) Phosphazen und/oder Phosphazenharz und/oder deren Derivate und/oder deren Vorprodukte ist.

20. Lackfolie nach Anspruch 13,
**dadurch gekennzeichnet,**
daß bei einem mehrschichtigen Aufbau der Lackschicht (1) die sichtseitig außenliegende Lage (21), insbesondere aus Klarlack, duroplastisch endhärtbar ist und daß der Binder für die außenliegende Lage (21) Urethan und/oder dessen Derivate und/oder dessen Vorprodukte ist.

21. Lackfolie nach Anspruch 13,
**dadurch gekennzeichnet,**
daß bei einem mehrschichtigen Aufbau der Lackschicht (1) die sichtseitig außenliegende Lage (21), insbesondere aus Klarlack, duroplastisch endhärtbar ist und daß der Binder für die außenliegende Lage (21) Acrylate und/oder deren Derivate und/oder deren Vorprodukte ist.

22. Lackfolie nach Anspruch 13,
**dadurch gekennzeichnet,**
daß die Lackschicht (1) unmittelbar auf einetr Kleberschicht (4) angeordnet ist.
